# EUROPEAN PATENT APPLICATION

(11) **EP 2 704 308 A1**
(43) Date of publication of application: **05.03.2014**
(21) Application number: 11864410.3
(22) Date of filing: 28.04.2011
(51) Int. Cl.: H02P 6/20

(54) **BRUSHLESS MOTOR CONTROL DEVICE AND BRUSHLESS MOTOR CONTROL METHOD**

(71) Applicant: Shindengen Electric Manufacturing Co., Ltd., Tokyo 100-0004 (JP)
(72) Inventor: HARADA Tomomi, Hanno-shi Saitama 357-8585 (JP)
(74) Representative: Dr. Weitzel & Partner
(86) International application number: PCT/JP2011/060419
(87) International publication number: WO 2012/147197

(57) **Abstract**

After a rotor of a three-phase brushless motor is previously moved by a simple control method to a predetermined rotary position, a motor is started-up.

A brushless motor control device (10) moves a rotor (3) to a predetermined rotary position (stop position) before a three-phase brushless motor (1) is started-up. Direct current Iuw is flowed between the same phases (U-phase, V-phase) for an initialization time, such as several 10 msec, thereby previously moving the rotor (3) to a predetermined rotary position. At the time when the initialization time elapses, the rotor (3) has moved to the predetermined rotary position. Therefore, the brushless motor control device (10) has recognized which phase is to be conducted first in order to rotate the motor 1 forward/backward. Thus, when the rotor is rotated forward/backward, the brushless motor control device (10) can accurately set a conduction phase to a motor coil.

## Description

### TECHNICAL FIELD

The present invention relates to a brushless motor control device and a brushless motor control method for controlling a three-phase brushless motor to be used as a starter motor and an alternate current power generator of an internal combustion (engine).

### BACKGROUND ART

Generally, as systems for drive-controlling brushless motors (hereinafter, also called as "motors") to be used as starters of internal combustions (engines), sensor drive control circuits have been known. In a sensor drive control circuit, multiple hole devices for detecting the position of a rotor (on the permanent magnet side) in a brushless motor are mounted around the rotor (see Non-Patent Document 1). However, the sensor drive control circuit requires that multiple hole devices be provided in the motor and requires that a magnet or the like for detecting the position of the rotor be mounted separately from the rotor as needed, thereby impeding miniaturization and cost reduction of the motor. Additionally, the precision of detecting the position of the rotor varies depending on the mounted state of the hole device. For this reason, implementation of a sensorless drive control circuit that detects the position of a rotor without using a sensor such as a hole device has been strongly demanded.

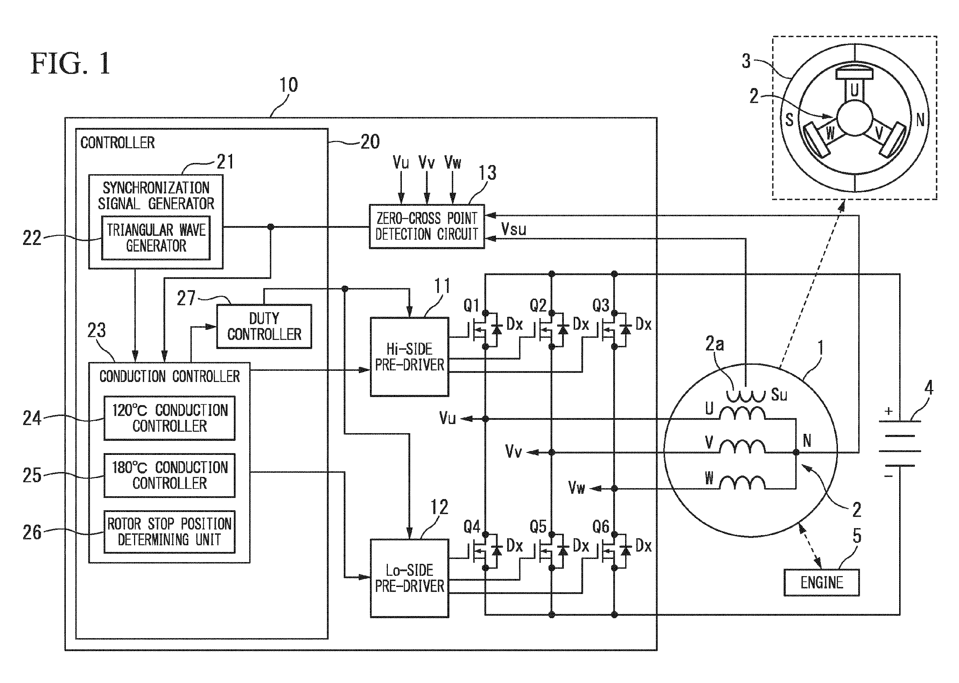

As one of the above-explained sensorless drive control circuits, for example, a drive control system using 120° conduction (system in which conduction is performed only in a 120° interval among the full 180° interval). Regarding the 120° conduction, zero-cross points of the phase voltage of a non-conduction phase are detected, thereby detecting the position of a rotor. Additionally, there is a brushless motor control device which is provided with a sub-coil that detects the phase voltage of any one of three phases of a three-phase brushless motor (see, for example a sub-coil Su included in the three-phase brushless motor 1 shown in FIG. 1), and which detects the phase voltage (sine wave voltage) of one phase induced to that sub-coil, thereby controlling 180° conduction (see Patent Document 1). Regarding the method of detecting the phase voltage, however, the phase voltage does not occur when the motor is stopped, and a phase cannot be detected. Therefore, it is impossible to detect at which position the rotor is stopped. For this reason, when the motor is rotated forward or backward, it is impossible to determine which phase is to be conducted first to rotate the rotor, thereby making it difficult to control forward/backward rotary driving of the rotor from the stopped state.

To solve this problem, the brushless motor control device disclosed in the above Patent Document 1 selects two phase-coils sequentially from the U-phase coil, the V-phase coil, and the W-phase coil while the motor is stopped. The brushless motor control device conducts the selected two phase-coils by applying the DC voltage therebetween. Then, the brushless motor control device compares patterns of currents respectfully flowing in the selected two phase-coils (total 6 types of current patterns defined by a combination of the two phase-coils, and directions in which the DC current is applied). Thus, the brushless motor control device detects the rotary stop position of the rotor.

Further, for example, there is a related motor control device (see Patent Document 2). In the brushless motor control device disclosed in Patent Document 2, a rotor does not operate if a diagnostic signal T with frequency higher than that of an excitation signal at power-on is applied between motor coils U and V. However, an induction voltage signal S resulting from mutual induction is observed in a coil W. This phenomenon is used. The area of a pole of the rotor facing the coil W (the number of poles) and a magnetic resistance value (mutual inductance M) determined by the polarity are reflected on the induction signal S. The phase and the level (value of the voltage) vary periodically. The induction signal S is detected, thereby specifying the rotary stop position of the rotor based on the phase of the induction signal S, the value of the voltage thereof, and the like.

### CITATION LIST

### [Patent Document]

[Patent Document 1] WO2008/120734
[Patent Document 2] Japanese Patent Unexamined Application, First Publication No. H7-274585

### [Non-Patent Document]

[Non-Patent Document 1] Shuichi Kondo, "Design of Brushless DC Motor Control Circuit", Transistor Technology, CQ Publishing Co., Ltd., February 2000, p.212-220

### DISCLOSURE OF INVENTION

### Problems to be Solved by the Invention

However, the rotor stop position detection method used for the brushless motor control device disclosed in the above Patent Document 1 requires that any two phase-coils of the U-phase coil, the V-phase coil, and the W-phase coil (winding wires) be sequentially selected and the DC voltage be applied thereto. Additionally, it is necessary to measure currents flowing to the selected two phase-coils and to compare current patterns thereof. For this reason, the circuit configuration and control thereof are complicated, and a problem on the precision of the detection also arises.

Additionally, regarding the device for drive-controlling the brushless motor disclosed in the above Patent Document 2, it is necessary to apply a high-frequency diagnostic signal T between the U-phase motor coil and the V-phase motor coil, measure a signal induced to the W-phase, and determine a phase. For this reason, the circuit configuration and control thereof are complicated, and a problem on the precision of the detection also arises.

An object of the present invention is to provide a brushless motor control device and a brushless motor control method, which can precisely set a conduction phase to a motor coil when a motor is started-up without detecting the rotary position (stop position) of a rotor of a three-phase brushless motor.

### Means for Solving the Problems

A brushless motor control device according to one aspect of the present invention is a brushless motor control device configured to drive control a three-phase brushless motor, and includes a controller configured to flow a direct current between selected two phases of the three-phase brushless motor before the three-phase brushless motor is started-up, thereby previously moving a rotor of the three-phase brushless motor to a stop position determined based on the two phases.

The brushless motor control device having such a configuration moves the rotor to the predetermined rotary position (stop position) before starting-up the three-phase brushless motor, and then starts-up the motor. For example, the brushless motor control device keeps flowing the predetermined direct current between the same two phases (for example, between the U-phase and the W-phase) for a predetermined initialization time (such as several 10 msec), thereby moving the rotor to the predetermined rotary position. At the time when the initialization time has elapsed, the rotor has moved to the predetermined rotary position. Therefore, the brushless motor control device has recognized which phase is to be conducted first in order to rotate the motor forward/backward.

Thus, when the motor is started-up, the brushless motor control device can accurately set a conduction phase to the motor coil without detecting the position at which rotation of the rotor of the three-phase brushless motor is initiated (stop position).

Additionally, the brushless motor control device according to one aspect of the present invention further includes: a switching circuit including series circuits for three phases, the series circuits including switching elements on an upper arm and switching elements on a lower arm, both ends of each of the series circuits being coupled to a direct current power source, and each connecting point of the switching element on the upper arm and the switching element on the lower arm being coupled to each phase of three-phase coils of the brushless motor. The controller includes a rotor stop position determining unit configured to turn on a switching element of a predetermined first phase included in the switching elements on the upper arm, and turn on a switching element of a predetermined second phase different from the first phase, which is included in the switching elements on the lower arm.

The brushless motor control device having such a configuration includes a rotor stop position determining unit configured to move the rotor to a predetermined rotary position (stop position). The rotor stop position determining unit turns on the switching element of a predetermined first phase (such as the U-phase) which is included in the switching elements on the upper arm of the three-phase bridge circuit. Additionally, the rotor stop position determining unit turns on the switching element of a predetermined second phase (such as the W-phase) which is included in the switching elements on the lower arm. Thus, the rotor stop position determining unit flows a predetermined direct current between predetermined two phases of the three-phase brushless motor for a predetermined time.

Thus, the brushless motor control device flows a predetermined direct current between predetermined two phases (for example, between the U-phase and the W-phase) before the three-phase brushless motor is started-up, thereby previously moving the rotor to the predetermined position at which rotation of the rotor is initiated (stop position). For this reason, when the moor is started-up, the brushless motor control device can accurately set a conduction phase to the motor coil without detecting the rotary position (stop position) of the rotor of the three-phase brushless motor.

Further, the brushless motor control device according to one aspect of the present invention, the rotor stop position determining unit is configured to control a duty ratio of an on/off interval of at least one of the switching element of the first phase on the upper arm and the switching element of the second phase on the lower arm to vary.

The brushless motor control device having such a configuration controls a duty ratio of an on/off interval of at least one of the switching element of the first phase (such as the U-phase) on the upper arm and the switching element of the second phase (such as the W-phase) on the lower arm to vary. Thereby, the brushless motor control device controls the amount of direct current flowing between predetermined two phases (for example, between the U-phase and the W-phase) of the three-phase brushless motor.

Thus, the rotor stop position determining unit can control the amount of direct current flowing between predetermined two phases of the three-phase brushless motor, thereby smoothly moving, at a predetermined speed, the rotor to the position at which predetermined rotation is initiated (stop position).

Regarding the brushless motor control device according to one aspect of the present invention, the three-phase brushless motor includes a starter motor for staring-up an internal combustion.

The brushless motor control device having such a configuration moves the rotor to the predetermined rotary position (stop position) before starting-up the three-phase brushless motor that operates as a starter motor for starting-up an internal combustion.

Thus, when the starter motor for the internal combustion is started-up, the brushless motor control device can accurately set a conduction phase to the motor coil without detecting the position at which rotation of the rotor of the starter motor is initiated (stop position).

Moreover, a brushless motor control method according to one aspect of the present invention is a brushless motor control method of drive controlling a three-phase brushless motor, and includes flowing a direct current between selected two phases of the three-phase brushless motor before the three-phase brushless motor is started-up, thereby previously moving a rotor of the three-phase brushless motor to a stop position determined based on the two phases.

In such a brushless motor control method, the rotor is moved to the predetermined rotary position (stop position) before the three-phase brushless motor is started-up, and then the motor is started-up. For example, the predetermined direct current is kept flowing between the same two phases (for example, between the U-phase and the W-phase) for a predetermined initialization time (such as several 10 msec), thereby moving the rotor to the predetermined rotary position. At the time when the initialization time has elapsed, the rotor has moved to the predetermined rotary position. Therefore, the brushless motor control device has recognized which phase is to be conducted first in order to rotate the motor forward/backward.

Thus, when the motor is started-up, the brushless motor control device can accurately set a conduction phase to the motor coil without detecting the position at which rotation of the rotor of the three-phase brushless motor is initiated (stop position).

### Effects of the Invention

According to the brushless motor control device of the present invention, before the three-phase brushless motor is started-up, a predetermined direct current is flown between predetermined two phases of the motor for a predetermined time, thereby previously moving the rotor to the predetermined rotary position.

Thus, when the motor is started-up, the brushless motor control device can set a conduction phase to the motor coil without detecting the position at which rotation of the rotor of the three-phase brushless motor is initiated (stop position).

### BRIEF DESCRIPTION OF THE DRAWINGS

FIG. 1 is a diagram illustrating a configuration of a brushless motor control device according to an embodiment of the present invention.
FIG. 2A is a diagram illustrating operation of a rotor stop position determining unit 26.
FIG. 2B is a diagram illustrating operation of the rotor stop position determining unit 26.
FIG. 3 is a diagram illustrating an operational waveform at the initial movement of a rotor.
FIG. 4A is a diagram illustrating duty control at the initial movement of the rotor.
FIG. 4B is a diagram illustrating duty control at the initial movement of the rotor.
FIG. 5 is a diagram illustrating 120° conduction.
FIG. 6 is a diagram illustrating control of a duty ratio during 120° conduction.
FIG. 7A is a diagram illustrating operation of a zero-cross point estimator 22.
FIG. 7B is a diagram illustrating operation of the zero-cross point estimator 22.
FIG. 8 is a diagram illustrating operation of control by the three-phase brushless motor performing zero-cross point estimation.
FIG. 9 is a diagram illustrating an example of another configuration of a sub-coil.

### BEST MODE FOR CARRYING OUT THE INVENTION

### (Outline)

A brushless motor control device of the present invention moves a rotor to the predetermined rotary position (stop position) before starting-up a three-phase brushless motor, and then starts-up a motor. For example, the brushless motor control device keeps flowing DC current between the same two phases (for example, between the U-phase and the V-phase) for a initialization time which is several 10msec, thereby moving the rotor to the predetermined rotary position. At the time when the initialization time elapses, the rotor is moved to the predetermined rotary position. For this reason, the brushless motor control device has recognized which phase is to be conducted first to rotate the motor forward/backward. Thus, the brushless motor control device accurately set a conduction phase to a motor coil when forward/backward rotation of the rotor is initiated.

Hereinafter, an embodiment of the present invention is explained with reference to the accompanying drawings.

### (Explanation of Entire Configuration of Brushless Motor Control Device)

FIG. 1 is a diagram illustrating a configuration of a brushless motor control device according to an embodiment of the present invention. A brushless motor control device 10 shown in FIG. 1 is a control device that converts the direct-current (DC) voltage of a battery 4 as a DC power source into an alternate-current (AC) voltage, and thus drives a three-phase brushless motor 1.

In FIG. 1, the three-phase brushless motor (hereinafter, also called as a "motor") 1 is motor that serves as a starter motor for an engine 5. The three-phase brushless motor 1 includes: a stator 2 including a U-phase coil, a V-phase coil, and a W phase coil (coils coiled around an iron core), and neutral wires N of the coils; and a rotor 3 including a bipolar permanent magnet (a pair ofN and S poles). Additionally, coils for three phases (U, V, and W) are winded around the stator 2 sequentially in a circumferential direction. Here, an example of the rotor 3 including the bipolar permanent magnet (a pair ofN and S poles) is shown. However, there is a case where the rotor 3 includes a multipolar magnet. For example, there is a case where the rotor 3 includes a tetrapolar permanent magnet (two pairs of N and S poles).

Further, the U-phase coil of the stator 2 is provided in parallel with a sub-coil (Su) 2a for detecting the U-phase voltage. Using the sub-coil Su, the voltage Vsu induced to the U-phase (more accurately, the sine wave voltage induced to the sub-coil Su by the permanent magnet of the rotor 3) is detected. Here, the sub-coil Su may be provided for another phase (V-phase or W-phase).

A brushless motor control device 10 includes a three-phase bridge circuit including switching elements Q1 to Q6 which are Nch-FFTs (field effect transistors). In the three-phase bridge circuit, drain terminals of the respective switching elements Q1 to Q3 on the upper arm side are commonly coupled to a positive terminal of the battery 4 that serves as a DC power source. Additionally, source terminals of the respective switching elements Q4 to Q6 on the lower arm side are commonly coupled to a negative terminal of the battery 4 that serves as the DC power source.

Additionally, the source terminal of the switching element Q1 on the upper arm side is coupled to the drain terminal of the switching element Q4 on the lower arm side. A connecting point of those switching elements Q1 and Q4 is coupled to a terminal of the U-phase coil of the three-phase brushless motor 1. Further, the source terminal of the switching element Q2 on the upper arm side is coupled to the drain terminal of the switching element Q5 on the lower arm side. A connecting point of those switching elements Q2 and Q5 is coupled to a terminal of the V-phase coil of the three-phase brushless motor 1.

Moreover, the source terminal of the switching element Q3 on the upper arm side is coupled to the drain terminal of the switching element Q6 on the lower arm side. A connecting point of those switching elements Q3 and Q6 is coupled to a terminal of the W-phase coil of the three-phase brushless motor 1. Here, fly wheel diodes Dx are coupled in parallel to the respective switching elements Q1 to Q6 such that a cathode is coupled to the positive terminal side of the battery 4, and an anode is coupled to the negative terminal side of the battery 4, as shown in the figure. Here, the switching elements Q1 to Q6 may be IGBTs (insulated gate bipolar transistors) or bipolar transistors.

Additionally, the brushless motor control device 10 includes: a Hi (high)-side pre-driver circuit 11 that on/off drives the switching elements (FETs) Q1 to Q3 on the upper arm; a Lo (low)-side pre-driver circuit 12 that on/off drives the switching elements (FETs) Q4 to Q6 on the lower arm side; a zero-cross point detection circuit 13; and a controller 21. The above switching elements Q1 to Q6 are driven by gate driving signals output from the Hi-side pre-driver circuit 11 and the Lo-side pre-driver circuit 12. These gate driving signals are generated by the pre-driver circuits 11 and 12 based on FET driving signals output from the controller (controller including a CPU and the like) 20.

When the three-phase brushless motor 1 rotates at low speed (when 120° conduction is performed as will be explained), the zero-cross point detection circuit 13 detects zero-cross points of the voltages Vu, Vv, and Vw induced to the respective phase coils (the U-phase coil, the V-phase coil, and the W-phase coil) of the stator 2. Further, when the three-phase brushless motor 1 rotates at high speed (when 180° conduction is performed as will be explained), the zero-cross point detection circuit detects zero-cross points from the voltage (U-phase voltage) Vsu induced to the sub-coil Su provided for the U-phase coil of the three-phase brushless motor 1. Information concerning the zero-cross points detected by the zero-cross point detection circuit 13 is output to the controller 21, as a zero-cross point signal. Here, the zero-cross points of the AC voltages induced to the respective phase coils (the U-phase coil, the V-phase coil, and the W-phase coil) and the zero-cross points of the AC voltage induced to the sub-coil Su during the 120° conduction are zero-cross points occurring when a middle point of the magnetic poles of the rotor 3 (boundary point of N and S poles) matches the position of each coil.

The controller 21 includes a zero-cross point estimator 22, a conduction controller 23, and a duty ratio controller 27. Additionally, the conduction controller 23 includes: a 120° conduction controller 24; a 180° conduction controller 25; and a rotor stop position determining unit 26.

In a case where 180° conduction is performed on the three-phase brushless motor 1, the zero-cross point estimator 22 included in the controller 21 receives from the zero-cross point detection circuit 13, information concerning the zero-cross points of the voltage Vsu induced to the sub-coil Su. Then, the zero-cross point estimator 22 measures a time interval T between the zero-cross points (adjacent zero-cross points) of the voltage Vsu induced to the sub-coil Su. For example, the zero-cross point estimator 22 measures the time interval T between the zero-cross points by counting, using a timer or the like, an interval from the time when the a zero-cross point of the output voltage Vsu of the sub-coil Su occurs to the time when the next zero-cross point of the output voltage Vsu occurs.

Further, the zero-cross point estimator 22 calculates a time T/3 and a time 2T/3 based on the time interval T between the zero-cross points, and thus estimates zero-cross points (phases) of the two other phases (V-phase, W-phase). Then, the zero-cross point estimator 22 outputs to the conduction controller 23, information concerning the zero-cross points of the voltage Vsu induced to the sub-coil Su (zero-cross points of the U-phase), and information concerning the estimated zero-cross points of the two other phases (V-phase, W-phase). The details of the operation for the zero-cross point estimator 22 to estimate the zero-cross points of the two other phases (V-phase, W-phase) will be explained later. Additionally, the sub-coil Su may be provided for the V-phase or the W-phase, instead for the U-phase. In this case, based on the voltage Vsu induced to the sub-coil Su, the zero-cross point estimator 22 estimates the zero-cross points of the two other phases not provided with the sub-coil Su.

When the three-phase brushless motor 1 rotates at low speed, the 120° conduction controller 24 included in the conduction controller 23 performs conduction on the coil only in a 120° interval of the full 180° conduction interval, thus drive controlling the three-phase brushless motor 1. When the three-phase brushless motor 1 rotates at high speed, the 180° conduction controller 25 performs 180° conduction, thus drive controlling the three-phase brushless motor 1.

Additionally, the rotor stop position determining unit 26 drive controls the three-phase brushless motor 1 so as to move the rotor 3 to a predetermined rotary position (stop position) before starting-up the three-phase brushless motor 1. The duty ratio controller 27 controls, with the duty ratio determined by the conduction controller 23, an on/off duty ratio during the on-intervals of the switching elements Q1 to Q6 on the upper and lower arm sides.

Here, the brushless motor control device 10 is mounted with a microcomputer (or microcontroller). The controller 21, the zero-cross point estimator 22, the conduction controller 23, the duty controller 27, and other circuits, which are included in the brushless motor control device 10, may be implemented by a software process if the process functions of those elements can be implemented by the above microcomputer executing software programs. As a matter of course, those elements may be implemented by hardware.

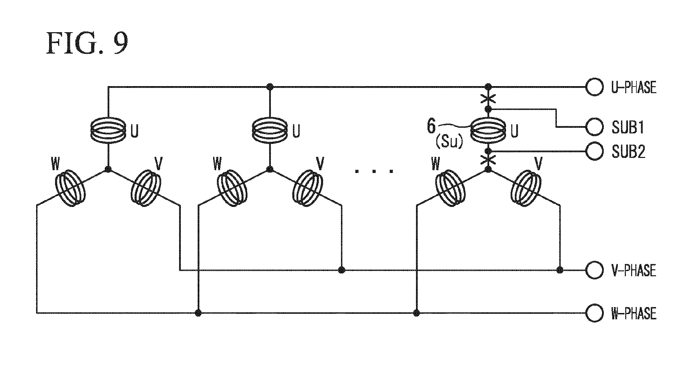

Regarding the sub-coil Su provided in the three-phase brushless motor 1, the sub-coil Su is provided in parallel with the U-phase coil of the stator, as shown in FIG. 1. Using sub-coil Su, the voltage Vsu induced to the U-phase (sine wave voltage induced to the sub-coil Su by rotation of the rotor) is detected. Alternatively, the sub-coil Su may be configured by a method shown in FIG. 9 as will be explained hereinafter.

In the case of FIG. 9, the three-phase brushless motor having multiple poles (six poles in the shown example) on the stator side is used, and the coil 6 of one pole associated with one of the phases (the U-phase in the shown example) is cut away from the others and is floated, and thus the sub-coil Su may be formed. In other words, the coil 6 of one of the total six poles associated with the U-phase is cut away from the other poles (is floated), terminals SUB1 and SUB2 are drawn from both ends of the coil 6 which is cut away, and thus the U-phase voltage Vsu is obtained from the voltage between the terminals SUB1 and SUB2. The zero-cross point estimator 22 receives from the zero-cross detection circuit 13, the information concerning zero-cross points of the voltage Vsu induced to the floated coil 6.

### (Explanation of Operation of Rotor Stop Position Determining Unit 26)

Explanation is given with respect to a rotor stop position determination operation performed by the rotor stop position determining unit 26 in the brushless motor control device 10 having the above configuration, that is, a rotary control operation performed on the rotor 3 at the time of initial movement of the rotor, at which the rotor 3 is moved to a predetermined rotary position (stop position).

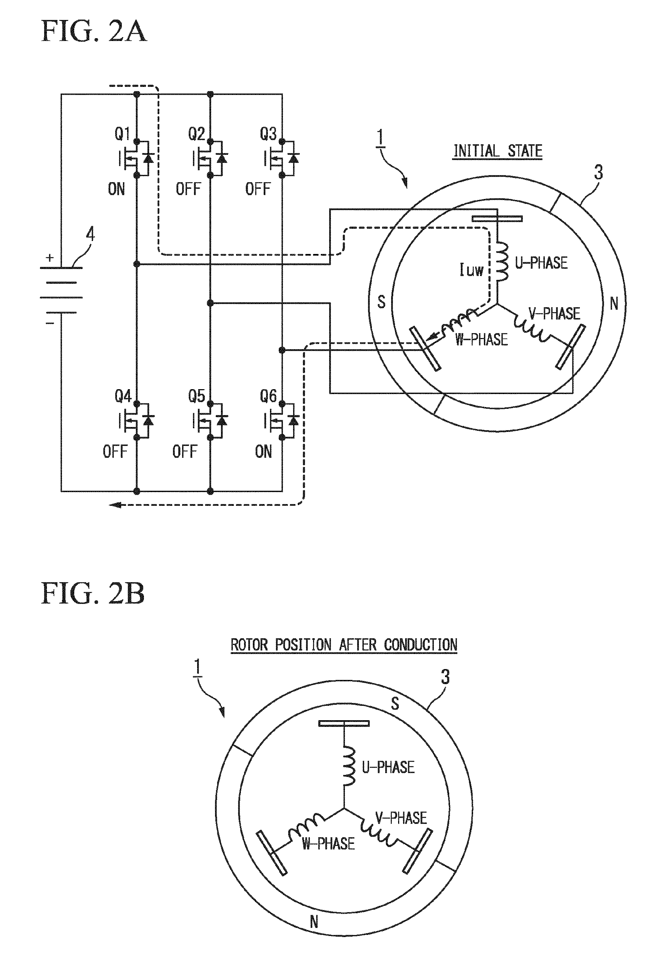

FIGS. 2A and 2B are diagrams illustrating operation at the time of initial movement of the rotor (rotor stop position determination operation). The rotor stop position determining unit 26 flows the predetermined DC current between predetermined two phases of the U-phase coil, the V-phase coil, and the W-phase coil for a predetermined time, thereby moving the rotor 3 to a predetermined rotary position.

For example, it is assumed that before the three-phase brushless motor 1 is started-up, the rotor stop position is present at a position where the U-phase coil and the W-phase coil face the S-pole of the permanent magnet, and the V-phase coil faces the N-pole of the permanent magnet (initial state), as shown in FIG. 2A. In this initial state, the rotor stop position determining unit 26 turns on the switching element Q1 coupled to the U-phase coil and the switching element Q6 coupled to the W-phase coil, and turns off the other switching elements Q2, Q3, Q4, and Q5.

Thus, the DC voltage (positive side) of the battery 4 is applied to a terminal of the U-phase coil via the switching element Q1, the DC voltage (negative side) of the battery 4 is applied to a terminal of the W-phase coil via the switching element Q6, and thus DC current Iuw flows between the U-phase and the W-phase. A magnetic field is generated by the current Iuw flowing between the U-phase and the W-phase. Interaction between the magnetic field generated by the U-phase and the W-phase and the magnetic field generated by the magnetic pole of the rotor 3 causes the rotor 3 to initiate rotating. Then, as shown in the three-phase brushless motor 1 shown in FIG. 2B, the rotor 3 stabilizes (stops) finally at a position where the U-phase coil faces the S-pole of the permanent magnet, the W-phase coil faces the N-pole of the permanent magnet, and the V-phase coil faces a boundary portion of the S-pole and the N-pole of the permanent magnet, as the position of the rotor after conduction. Thus, the rotor stop position determining unit 26 flows the predetermined DC current between the predetermined two phases of the U-phase coil, the V-phase coil, and the W-phase coil for the predetermined time, thereby making it possible to move the rotor 3 to the position where predetermined rotation of the rotor 3 is initiated (stop position).

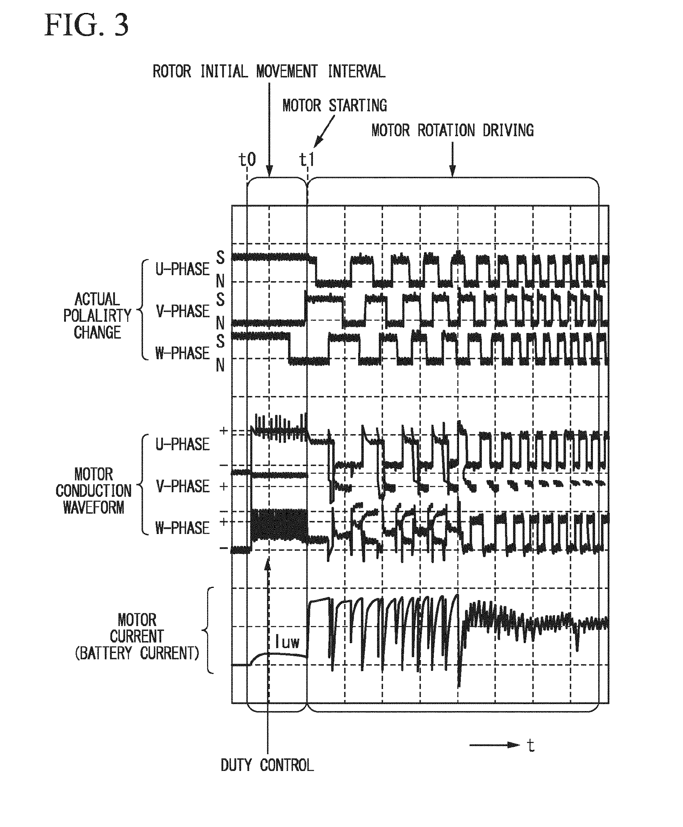

Additionally, FIG. 3 is a diagram illustrating an example of operational waveforms at the time of the initial movement of the rotor (at the time of the operation of determining the rotary position of the rotor before the motor is started-up). FIG. 3 shows a waveform of an actual polarity change, a waveform of conduction to the motor (voltage waveform), and a waveform of current flowing to the motor (more accurately, a waveform of current flowing from the battery 4 to the three-phase brushless motor 1), which are arranged in a vertical direction, where a horizontal direction denotes elapses time t.

As shown in the waveforms shown in FIG. 3, the rotor stop position determining unit 26 flows the DC current Iuw between the predetermined two phases (between the U-phase and the W-phase in the shown case) of the three-phase brushless motor 1 in the rotor initial movement period from time t0 to time t1, thereby moving the stop position of the rotor 3 to the predetermined rotary position. Then, after the rotor 3 is moved to the predetermined rotary position, the conduction controller 23 starts-up the motor 1 at time t1, and after time t1, drives the motor 1 so that the rotation speed of the motor 1 gradually increases.

In the rotor initial movement period from time t0 to time t1, it is assumed that the rotary position of the rotor 3 at time t0 is present at a position where the U-phase coil faces the S-pole of the permanent magnet of the rotor 3, the V-phase coil faces the N-pole of the permanent magnet of the rotor 3, and the W-phase coil faces the S-pole of the permanent magnet of the rotor 3, as shown in the waveform of the polarity change shown in FIG. 3. Then, in the rotor initial movement period from time t0 to time t1, as shown in the waveform of the conduction to the motor shown in FIG. 3, the switching element Q1 is turned on, thereby applying the positive voltage of the battery 4 to a terminal of the U-phase coil. Additionally, the switching element Q6 is turned on, thereby applying the negative voltage of the battery 4 to a terminal of the W-phase coil.

Here, in the rotor initial movement period from time t0 to time t1, the switching element Q6 of the W-phase is on/off controlled (duty control) while maintaining the on-state of the switching element Q1 of the U-phase, thereby equivalently adjusting the voltage applied between the two coils of the U-phase coil and the W-phase coil. Thus, the duty controller 27 controls the current Iuw flowing between the two coils of the U-phase coil and the W-phase coil so as to be a predetermined current value, as shown in the waveform of the current flowing to the motor shown in FIG. 3.

Then, in the rotor initial movement period from time t0 to time t1, after the rotor stop position determination operation of moving the rotor 3 to the predetermined rotary position (stop position) ends, at time t1, the rotary position of the rotor 3 enters a state where the U-phase coil faces the S-pole of the permanent magnet of the rotor 3, the V-phase coil faces a point at which the N-pole and the S-pole of the permanent magnet of the rotor 3 are switched, and the W-phase coil faces the N-pole of the permanent magnet of the rotor 3. For example, the rotary position (stop position) of the rotor 3 becomes the position at which the rotation is initiated as shown in FIG. 2B.

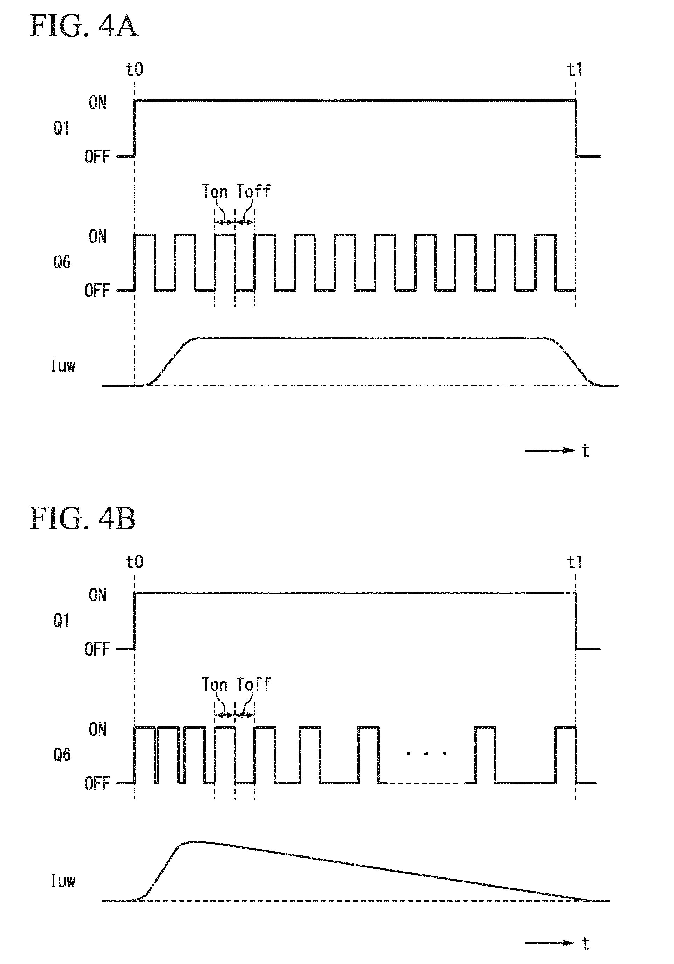

Additionally, FIGS. 4A and 4B are diagrams illustrating duty control performed by the rotor stop position determining unit 26 at the time of the rotor initial movement. FIG. 4A illustrates a case where a duty ratio is constant. FIG. 4B illustrates a case where the duty ratio is varied in accordance with elapsed time. FIGS. 4A and 4B show a waveform of on/off states of the switching elements Q1, a waveform of on/off states of the switching element Q6, and a waveform of the current Iuw flowing between the U-phase and the W-phase, which are arranged in a vertical direction, where a horizontal direction denotes elapsed time t.

As shown in FIGS. 4A and 4B, in the rotor initial movement period (from time t0 to time t1), the rotor stop position determining unit 26 on/off controls the switching element Q6 while maintaining the on-state of the switching element Q1, thus performing on/off duty control. In other words, the switching element Q6 is controlled so that an on-interval (Ton) and an off-interval (Toff) are alternated repeatedly.

Additionally, an example shown in FIG. 4A is an example where the duty ratio "Ton/(Ton+Toff)" is kept a constant value as time t elapses, and the Iuw flowing between the U-phase and the V-phase is a constant current value in accordance with the duty ratio.

Further, an example shown in FIG. 4B is an example where in the rotor initial movement period which starts from time t1, the length of the on-interval Ton of the switching element Q6 is kept constant, and the length Toff of the off-interval Toff is gradually increased as time t elapses, thus gradually decreasing the duty ratio "Ton/(Ton+Toff)".

As shown in FIG. 4B, in the rotor initial movement period, the rotor stop position determining unit 26 can first flow the current Iuw with a predetermined value between the U-phase and the W-phase of the three-phase brushless motor 1, and then gradually decrease the current Iuw as elapsed time t elapses. In other words, the rotor stop position determining unit 26 controls the amount of the DC current Iuw flowing between the U-phase and the W-phase of the three-phase brushless motor 1 so as to vary. Thus, when the rotor 3 is moved to the predetermined rotary position, the brushless motor control device 10 can smoothly move the rotor 3 to the predetermined rotary position (stop position) at the predetermined speed.

Thus, the brushless motor control device 10 moves the rotor 3 to the predetermined position (fixed position) before the motor is started-up, thereby making it possible to accurately set a conduction phase to the motor coil and accurately start-up the three-phase brushless motor 1. Then, after the three-phase brushless motor 1 is started-up, that is, after time t1, the three-phase brushless motor 1 can be driven by the conduction controller 23 performing the 120° conduction or 180° conduction.

Here, a method of controlling the three-phase brushless motor 1 by the 120° conduction and a method of controlling the three-phase brushless motor 1 by the 180° conduction are not directly relevant to the present invention, and are generally well-known methods. Therefore, the 120° conduction and the 180° conduction are briefly explained hereinafter.

### (Explanation of Control Method by 120° Conduction)

In a case where the three-phase brushless motor 1 rotates at low speed after the motor is started-up, the 120° conduction controller 24 drive controls the motor by the 120° conduction method.

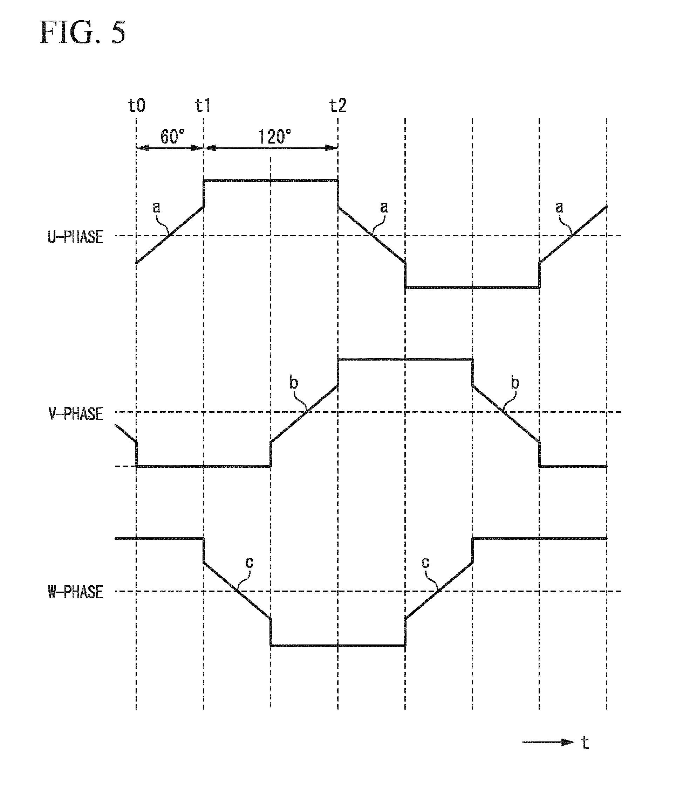

FIG. 5 is a diagram illustrating 120° conduction and shows a waveform of the voltage of the U-coil terminal, a waveform of the voltage of the V-phase terminal, and a waveform of the voltage of the W-phase terminal, which are arranged in a vertical direction, where a horizontal direction denotes elapsed time t.

The 120° conduction is performed by the 120° conduction controller 24 included in the conduction controller 23. In the 120° conduction control, coils are conducted only in the 120° interval among the full 180° interval, as shown in the waveforms of the U-phase voltage, the V-phase voltage, and the W-phase voltage, which are shown in FIG. 5. Accordingly, a non-conduction phase occurs in each of the U-phase, the V-phase, and the W-phase. Zero-cross points a, b, and c of those non-conduction phases are detected, thereby making it possible to detect the position of the rotor.

For example, the U-phase coil has a non-conduction phase from time t0 to time t1 (in 60° interval) and has a conduction phase from time t1 to time t2 (in 120° interval). In the segment corresponding to the non-conduction phase from time t0 to time t1 (in 60° interval), the voltage of the U-phase coil induced by the magnetic pole of the rotor occurs, and the zero-cross point a thereof is detected, thereby making it possible to detect the position of the rotor. Regarding the V-phase, similarly, the zero-cross point b thereof is detected in the segment corresponding to the non-conduction phase, thereby making it possible to detect the position of the rotor. Regarding the W-phase, similarly, the zero-cross point c thereof is detected in the segment corresponding to the non-conduction phase, thereby making it possible to detect the position of the rotor. Thus, it is possible to detect the position of the rotor at each 60° (points at which the magnetic pole of the rotor switches), and determine a conduction phase and a conduction timing with respect to the U-phase, the V-phase, and the W-phase in accordance with the position of the rotor, thereby driving the three-phase brushless motor 1.

Here, when the motor rotates at low speed, based on the aforementioned voltage (U-phase voltage) Vsu induced to the sub-coil Su, it is possible to control three-phase brushless motor 1 by 180° conduction, in lieu of the above 120° conduction.

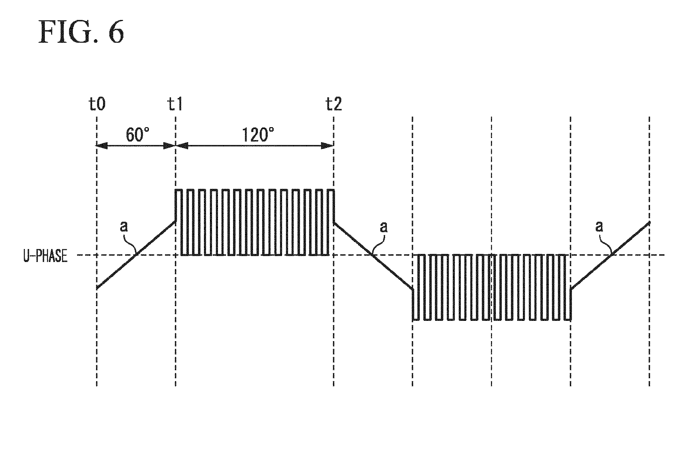

Additionally, in a case where 120° conduction is performed by the 120° conduction controller 24, in order to adjust the voltage to be applied to the three-phase brushless motor 1, it is possible to control the on/off duty ratio in the on-interval of each of the switching elements Q1 to Q6. For example, it is possible to vary the on/off duty ratio as shown in the waveform of the voltage of the U-phase coil during the 120° conduction shown in FIG. 6. This control of the duty ratio is performed similarly with respect to the V-phase and the W-phase. Thus, it is possible to vary the voltage to be applied to the motor coils in accordance with the number of rotations of the three-phase brushless motor 1. Additionally, during the 180° conduction, the on/off duty ratio can be controlled similarly.

### (Explanation of Method of Detecting Position of Rotor When Motor Rotates at High Speed)

On the other hand, in a case where the motor rotates at high speed, in order to invoke the sufficient power of the motor, 180° conduction is performed on the three-phase brushless motor 1 by the 180° conduction controller 25. In the case of the 180° conduction, zero-cross points of the non-conduction phase cannot be detected as in the above case of the 120° conduction. For this reason, a sub-coil is provided for any one of the U-phase, the V-phase, and the W-phase. For example, as shown in FIG. 1, in the three-phase brushless motor 1, a sub-coil Su is provided in parallel with the U-phase. Alternatively, as shown in FIG. 9, the three-phase brushless motor having multiple poles (six poles in the shown example) on the stator side is used, and the coil 6 of one pole associated with one of the phases (the U-phase in the shown example) is cut away from the others and is floated, and thus the sub-coil Su is formed.

In a case where the sub-coil Su is provided for the U-phase coil, the voltage Vsu induced to the U-phase (sine wave voltage induced by the rotation of the rotor) occurs to the sub-coil Su. The zero-cross point detection circuit 13 detects zero-cross points of the voltage Vsu induced to the sub-coil Su, thereby determining that the position of the sub-coil Su matches the middle point of the magnetic poles of the stator 2 (boundary point of the N-pole and the S-pole). Then, the zero-cross point estimator 22 detects zero-cross points of the phase voltage Vsu induced to the sub-coil Su, which are detected by the above zero-cross point detection circuit 13. Additionally, based on the information concerning those zero-cross points, zero-cross points (rotor position) of the other two phases (V-phase, W-phase) are estimated.

### (Explanation of Operation of Zero-Cross Point Estimator 22 and 180° Conduction)

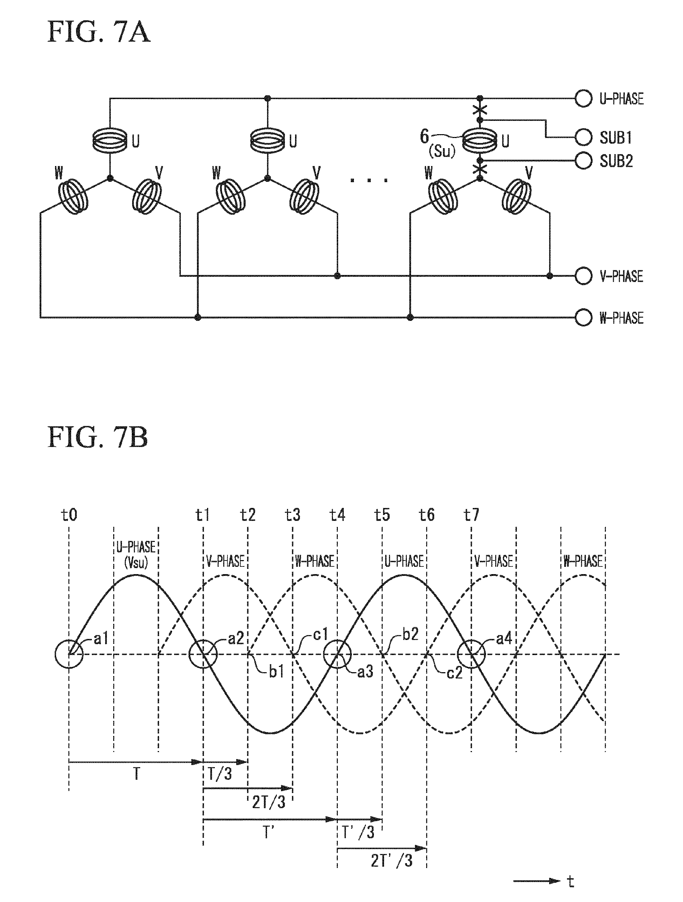

FIGS. 7A and 7B are diagrams illustrating operation of the zero-cross point estimator 22. FIG. 7A shows an example where the coil 6 of one pole, which is the U-phase coil, is cut away from the other winding wires and is floated, and the floated coil 6 is regarded as a sub-coil Su. FIG. 7A is the same diagram as FIG. 9.

Additionally, FIG. 7B shows the voltage (U-phase voltage) Vsu induced to the sub-coil Su, zero-cross points of the voltage Vsu, and estimated zero-cross points of the V-phase and W-phase voltages, and waveforms of the V-phase and the W-phase with the estimated zero-cross points (waveforms of the virtual voltages induced to the V-phase and the W-phase which are not actually detected and indicated by dashed lines), where a horizontal direction denotes elapsed time t.

The zero-cross point estimator 22 detects a phase of the U-phase voltage (phase of the voltage Vsu induced to the sub-coil Su) based on detection signals of the zero-cross points of the output voltage Vsu of the sub-coil Su which are detected by the zero-cross point detection circuit 13. Additionally, the zero-cross point estimator 22 calculates the time interval T between adjacent zero-cross points. More specifically, as shown in FIG. 7B, the time interval T between adjacent zero-cross points (=t1-t0) is calculated based on a zero-cross point a1 at time t0 of the voltage Vsu induced to the sub-coil Su and a zero-cross point a2 at time t1.

Then, based on the time interval T between the adjacent zero-cross points a1 and a2 (in 180° interval), the zero-cross point estimator 22 calculates times 1/3T and 2/3T where the time interval T is divided by three (divided by 60°). The time 1/3T calculated by the zero-cross point estimator 22 corresponds to the interval from the time t1 when the zero-cross point a2 of the U-phase occurs to the time t2 when a zero-cross point b1 of the W-phase voltage occurs, as shown in FIG. 7B. Similarly, the time 2/3T calculated by the zero-cross point estimator 22 corresponds to the interval from the time t1 when the zero-cross point a2 of the U-phase occurs to a time t3 when a zero-cross point c1 of the V-phase voltage occurs.

In other words, generally, the rotation speed of three-phase brushless motor 1 does not vary extensively. For this reason, regarding the output voltage (AC voltage) Vsu of the sub-coil Su, a waveform in the current cycle can be considered to be similar to the waveform in the one-previous cycle. For this reason, the zero-cross point estimator 22 can estimate subsequently occurring zero-cross points of the W-phase and the V-phase based on the time interval T between adjacent zero-cross points of the output voltage Vsu of the sub-coil Su. Those zero-cross points are zero-cross points occurring when a middle point of the magnetic poles of the rotor (boundary point of the N and S poles) matches the position of each coil. Those zero-cross points are estimated, thereby making it possible to estimate the phases (rotor positions) of the AC output voltages Vu, Vv, and Vw.

Then, returning to time t4, when a zero-cross point a3 of the output voltage Vsu of the sub-coil Su occurs again, the zero-cross point estimator 22 measures a time interval T' between the adjacent zero-cross points a2 and a3. Based on the time interval T', the zero-cross point estimator 22 recalculates a time 1/3T' and a time 2/3T'. The time 1/3T' calculated by the zero-cross point estimator 22 corresponds to the interval from the time t4 when the zero-cross point a3 of the U-phase occurs to time t5 when a zero-cross point b2 of the W-phase voltage occurs, as shown in FIG. 7B. Similarly, the time 2/3T' calculated by the zero-cross point estimator 22 corresponds to the interval from time t4 when the zero-cross point a3 of the U-phase occurs to time t6 when a zero-cross point c2 of the V-phase voltage occurs. Thereafter, the zero-cross point estimator 22 repeats measurement of the time interval T between zero-cross points of the output voltage of the sub-coil Su and estimation of zero-cross points of the W-phase and the V-phase by calculation of the time 1/3T and the time 2/3T.

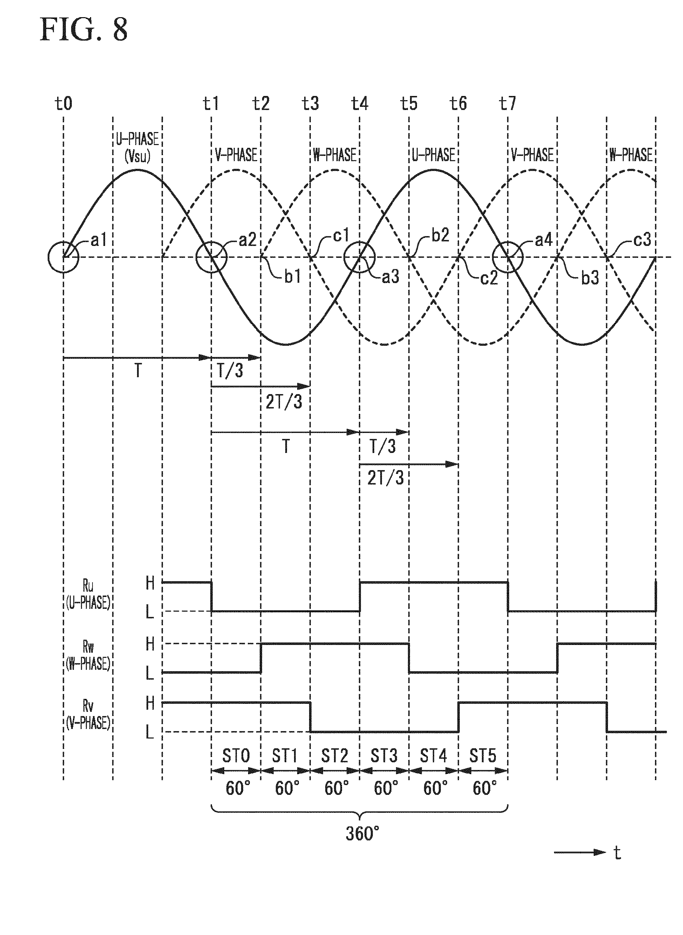

FIG. 8 is a diagram illustrating operation of control by the three-phase brushless motor performing estimation of zero-cross points. FIG. 8 shows the output voltage Vsu of the sub-coil Su, the zero-cross points of the voltage Vsu, estimated zero-cross points of the V-phase and W-phase voltages, and waveforms of the V-phase and the W-phase with the estimated zero-cross points (waveforms of virtual voltages induced to the V-phase and the W-phase which are not actually detected and indicated by dashed lines), where a horizontal direction denotes elapsed time t. Additionally, FIG. 8 shows waveforms (rotor position detection waveforms) obtained by sequentially arranging, in a vertical direction, a rectangular wave Ru synchronized with the U-phase generated based on the zero-cross points, a rectangular wave Rw synchronized with the W-phase, and a rectangular wave Rv synchronized with the V-phase. The rectangular waves of the U-phase, the V-phase, and the W-phase, which are shown in FIG. 8, are generated by the conduction controller 23 (or the zero-cross point estimator 22) based on the zero-cross points of the voltage Vsu and the estimated zero-cross points of the V-phase and the W-phase.

As shown in FIG. 8, the rectangular wave Ru of the U-phase is a waveform that is inverted in level at each zero-cross point (for example, a2, a3, and a4) of the waveform of the U-phase voltage (more accurately, the waveform of the output voltage of the sub-coil Su). The rectangular wave Ru of the U-phase varies from a H level (high level) to a L level (low level) at the zero-cross point a2, varies from the L level to the H level at the zero-cross point a3, and varies from the H level to the L level at the zero-cross point a4.

Additionally, the rectangular wave Rw of the W-phase is a waveform that is inverted in level at each zero-cross point (for example, b1, b2, and b3) of the waveform of the W-phase voltage (waveform of the virtual voltage that is not detected actually). The rectangular wave Rw of the W-phase varies from a L level to a H level at the zero-cross point b1, varies from the H level to the L level at the zero-cross point b2, and varies from the L level to the H level at the zero-cross point b3. Further, the rectangular wave Rv of the V-phase is a waveform that is inverted in level at each zero-cross point (for example, c1, c2, and c3) of the waveform of the V-phase voltage (waveform of the virtual voltage that is not detected actually). The rectangular wave Rv of the V-phase varies from a H level to a L level at the zero-cross point c1, varies from the L level to the H level at the zero-cross point c2, and varies from the H level to the L level at the zero-cross point c3.

Accordingly, since the zero-cross points of each phase are points where a middle point of the magnetic poles of the rotor (boundary point of the N and S poles) passes, it is possible to detect rotor position information by detecting zero-cross points based on the H level state and the L level state of the respective rectangular waves Ru, Rv, and Rw synchronized with the W-phase, the U-phase, and the V-phase, which are shown in FIG. 8. For example, as shown in FIG. 8, it is possible to detect six segments from 0 to 5 at each 60 degrees. For example, in the one rotation cycle from time t1 to time t7 (in 360° interval of the U-phase), the position of the rotor is detected at each 60° in the six segments, which are: a zero stage ST0 from time t1 to time t2; a first stage ST1 from time t2 to time t3; a second stage ST2 from time t3 to time t4; a third stage ST3 from time t4 to time t5; a fourth stage ST4 from time t5 to time t6; and a fifth stage ST5 from time t6 to time t7. The detected positions of the rotor at each 60° can be regarded as points at which the stages (stages of the phase voltages at each 60° which are to be applied to the U-phase coil, the V-phase coil, and the W-phase coil) are switched.

Thus, the brushless motor control device 10 detects zero-cross points of the voltage Vsu induced only to one sub-coil Su, and estimates zero-cross points of the two other phases (V-phase, W-phase) (estimates the position of the rotor) based on the zero-cross points of the voltage Vsu. Then, the 180° conduction controller 25 controls switching of the conduction phase and the conduction timing with respect to the U-phase coil, the V-phase coil, and the W-phase coil of the three-phase brushless motor 1 based on the estimated position of the rotor. In other words, in the brushless motor control device 10, the zero-cross point estimator 22 estimates zero-cross points, thereby estimating the position of the rotor. Then, the 180° conduction controller 25 selects a conduction pattern and a conduction timing in accordance with the position of the rotor, thereby performing 180° conduction on the motor coils.

Here, the details of the 180° conduction and waveforms of the conduction are generally well-known, and therefore explanations thereof are omitted. Additionally, even in a case where the above 120° conduction is performed, similarly to the case where the 180° conduction is performed, it is possible to estimate the position of the rotor based on the zero-cross points of the voltage induced to the sub-coil Su and the zero-cross points estimated by the zero-cross point estimator 22, select a conduction pattern and a conduction timing in accordance with the position of the rotor, thereby performing 120° conduction on the motor coils.

As explained above, in the brushless motor control device 10 of the present invention, before the three-phase brushless motor 1 is started-up, the rotor stop position determining unit 26 applies the positive and negative DC voltages between the predetermined two phases of the U-phase coil, the V-phase coil, and the W-phase coil, thereby moving the rotor 3 to the predetermined rotary position (stop position). Then, the conduction controller 23 selects a conduction phase of a motor coil that can generate the maximum torque at the stop position of the rotor 3, thereby starting-up the motor.

Then, when the three-phase brushless motor 1 rotates at low speed after the motor is started-up, the 120° conduction controller 24 drive controls the three-phase brushless motor 1 by the 120° conduction. Additionally, when the three-phase brushless motor 1 rotates at high speed, the 180° conduction controller 25 drive controls the three-phase brushless motor 1 by the 180° conduction.

Although the embodiment of the present invention has been explained, the correspondence relationship between one aspect of the present invention and the above embodiment is explained supplementarily.

In the above embodiment, the brushless motor control device according to one aspect of the present invention corresponds to the brushless motor control device 10 shown in FIG. 10. Additionally, the three-phase brushless motor according to one aspect of the present invention corresponds to the three-phase brushless motor 1. The rotor according to one aspect of the present invention corresponds to the rotor 3. Further, the controller according to one aspect of the present invention corresponds to the controller 21. Moreover, the switching elements on the upper arm side according to one aspect of the present invention correspond to the switching elements Q1, Q2, and Q3. Additionally, the switching elements on the lower arm side according to one aspect of the present invention correspond to the switching elements Q4, Q5, and Q6. The switching circuit according to one aspect of the present invention corresponds to the three-phase bridge circuit including the switching elements Q1 to Q6. Further, the direct-current power source according to one aspect of the present invention corresponds to the battery 4. The rotor stop position determining unit according to one aspect of the present invention corresponds to the rotor stop position determining unit 26 included in the controller 21.

Then, in the above embodiment, the brushless motor control device 10 is a brushless motor control device configured to drive control the three-phase brushless motor 1, and includes the controller 21 configured to flow a predetermined direct current Iuw between predetermined two phases (for example, between the U-phase and the W-phase) of the motor 1 for a predetermined time, thereby moving the rotor 3 to the predetermined rotary position.

The brushless motor control device 10 having such a configuration moves the rotor 3 to the predetermined rotary position (stop position) before starting-up the three-phase brushless motor 1, and then starts-up the motor. For example, the brushless motor control device 10 keeps flowing the predetermined DC current between the same two phases (for example, between the U-phase and the W-phase) for a predetermined initialization time (such as several 10 msec), thereby moving the rotor 3 to the predetermined rotary position. At the time when the initialization time has elapsed, the rotor 3 has been moved to the predetermined rotary position, and therefore the brushless motor control device 10 has recognized which phase is to be conducted first in order to rotate the motor 1 forward/backward.

Thus, when the motor is started-up, the brushless motor control device 10 can accurately set a conduction phase to the motor coils without detecting a rotary position (stop position) of the rotor 3 of the three-phase brushless motor 1.

Additionally, in the above embodiment, the brushless motor control device 10 includes: a three-phase bridge circuit including series circuits for three phases, the series circuits including the switching elements Q1, Q2, and Q3 on the upper arm side and the switching elements Q4, Q5, and Q6 on the lower arm side, both ends of each of the series circuit being coupled to the battery 4, each connecting point of the switching element on the upper arm and the switching element on the lower arm being coupled to each phase of the three-phase coils of the brushless motor 1; and a rotor stop position determining unit 26 configured to turn on the switching element (such as Q1) of a predetermined first phase (such as the U-phase) which is included in the switching elements on the upper arm side, and turn on the switching element (such as Q6) of a predetermined second phase (such as the W-phase) different from the first phase, which is included in the switching elements on the lower arm side.

Thus, the brushless motor control device 10 includes having such a configuration includes a rotor stop position determining unit 26 configured to move the rotor 3 to a predetermined rotary position (stop position) before the three-phase brushless motor 1 is started-up. The rotor stop position determining unit 26 turns on the switching element (such as Q1) of a predetermined first phase which is on the upper arm side of the three-phase bridge circuit. Additionally, the rotor stop position determining unit 26 turns on the switching element (such as Q6) of a predetermined second phase which is on the lower arm side. Thus, the rotor stop position determining unit 26 flows a predetermined DC current (such as current Iuw) between predetermined two phases (for example, between the U-phase and the W-phase) of the three-phase brushless motor 1.

Thus, the brushless motor control device 10 flows a predetermined DC current (such as current Iuw) between predetermined two phases (for example, between the U-phase and the W-phase) before starting-up the three-phase brushless motor 1, thereby previously moving the rotor 3 to the predetermined rotary position (stop position). For this reason, when the moor is started-up, the brushless motor control device 10 can accurately set a conduction phase to the motor coils without detecting the rotary position (stop position) of the rotor 3 of the three-phase brushless motor 1.

Although an embodiment of the present invention has been explained above, the brushless motor control device of the present invention is not limited to the above shown examples. As matter of course, various modifications may be made without departing from the scope of the present invention.

### INDUSTRIAL APPLICABILITY

The brushless motor control device according to one aspect of the present invention is applicable to a device for driving a three-phase brushless motor to be used for a starter motor of an internal combustion (engine). The brushless motor control device according to one aspect of the present invention moves, by a simple control method, the rotor to a predetermined rotary position (stop position) before the three-phase brushless motor is started-up. Thus, when the motor is started-up, the brushless motor control device can accurately set a conduction phase to the motor coils without detecting the rotary position (stop position) of the rotor of the three-phase brushless motor.

### DESCRIPTION OF REFERENCE NUMERALS

1: three-phase brushless motor
2: stator
3: rotor
4: battery
5: engine
10: brushless motor control device
11: Hi-side pre-driver circuit
12: Lo-side pre-driver circuit
13: zero-cross point detection circuit
21: controller
22: zero-cross point estimator
23: conduction controller
24: 120° conduction controller
25: 180° conduction controller
26: rotor stop position determining unit
27: duty controller
31: reference voltage circuit
Ru, Rv, and Rw: rectangular wave

## Claims

1. A brushless motor control device configured to drive control a three-phase brushless motor, the brushless motor control device comprising:
a controller configured to flow a direct current between selected two phases of the three-phase brushless motor before the three-phase brushless motor is started-up, thereby previously moving a rotor of the three-phase brushless motor to a stop position determined based on the two phases.

2. The brushless motor control device according to claim 1 further comprising:
a switching circuit including series circuits for three phases, the series circuits including switching elements on an upper arm and switching elements on a lower arm, both ends of each of the series circuits being coupled to a direct current power source, and each connecting point of the switching element on the upper arm and the switching element on the lower arm being coupled to each phase of three-phase coils of the brushless motor,
wherein the controller comprises:
a rotor stop position determining unit configured to turn on a switching element of a predetermined first phase included in the switching elements on the upper arm, and turn on a switching element of a predetermined second phase different from the first phase, which is included in the switching elements on the lower arm.

3. The brushless motor control device according to claim 2, wherein the rotor stop position determining unit is configured to control a duty ratio of an on/off interval of at least one of the switching element of the first phase on the upper arm and the switching element of the second phase on the lower arm to vary.

4. The brushless motor control device according to any one of claims 1 to 3, wherein the three-phase brushless motor comprises a starter motor for staring-up an internal combustion.

5. A brushless motor control method of drive controlling a three-phase brushless motor, the brushless motor control method comprising:
flowing a direct current between selected two phases of the three-phase brushless motor before the three-phase brushless motor is started-up, thereby previously moving a rotor of the three-phase brushless motor to a stop position determined based on the two phases.
